# EUROPÄISCHE PATENTSCHRIFT

(11) **EP 3 207 506 B1**
(45) Veröffentlichungstag und Bekanntmachung des Hinweises auf die Patenterteilung: **21.09.2022**
(21) Anmeldenummer: 15778873.8
(22) Anmeldetag: 09.10.2015
(51) Int. Cl.: G06K 19/077

(54) **KARTENKÖRPER FÜR EINEN DATENTRÄGER UND INLAY FÜR EINEN TEIL-KARTENKÖRPER**
CARD BODY FOR A DATA CARRIER AND INLAY FOR A PARTIAL CARD BODY
CORPS DE CARTE POUR UN SUPPORT DE DONNÉES ET COUCHE INTERNE POUR UN SOUS-CORPS DE CARTE

(30) Priorität: 16.10.2014 DE 102014015279; 28.09.2015 DE 102015012616
(43) Veröffentlichungstag der Anmeldung: 23.08.2017
(73) Patentinhaber: Giesecke+Devrient Mobile Security GmbH, 81677 München (DE)
(72) Erfinder: KLUGE, Stefan, 80997 München (DE)
(74) Vertreter: Giesecke + Devrient IP
(86) Internationale Anmeldenummer: PCT/EP2015/002009
(87) Internationale Veröffentlichungsnummer: WO 2016/058686

(56) Entgegenhaltungen:
- WO-A1-2014/118568
- CN-U- 202 528 632
- CN-U- 202 724 631

## Beschreibung

Die vorliegende Erfindung betrifft einen Kartenkörper für einen Datenträger .

Als Echtheitsnachweis für kartenförmige Datenträger werden auf die Datenträger unterschiedliche Folien, beispielsweise Hologramme aufgebracht. Darüber hinaus ist als Echtheitsmerkmal auch eine Lichttransmission durch einen Kartenkörper bekannt. Der Kartenkörper kann eine streifenförmige Folie umfassen. Die streifenförmige Folie ist dabei mit transparenten Folienstreifen ausgebildet, zu denen benachbart opake Folienstreifen angeordnet sind. Über der streifenförmigen Folie ist ein graphisches Element angeordnet, das im Durchlicht oder im Auflicht erkennbar ist.

Der Kartenkörper wird im täglichen Gebrauch unterschiedlichen Beanspruchungen ausgesetzt, beispielsweise mechanischer oder thermischer Beanspruchung. Dabei können die äußeren Oberflächen des Kartenkörpers leicht verkratzen, sodass der Kartenkörper seine optischen, durchscheinenden Eigenschaften verliert. Weiterhin ist eine streifenförmige Folie nachzubauen, sodass sie als Echtheitsmerkmal gefälscht werden kann.

WO 2014/118568 A1 beschreibt ein optisches Sicherheitsmerkmal, wie z.B. ein Hologramm oder eine optische Beugungsstruktur, und dessen Herstellung.

Es ist deshalb eine Aufgabe der Erfindung ein fälschungssicheres Echtheitsmerkmal bereitzustellen.

Diese Aufgabe der Erfindung wird durch die Merkmale des unabhängigen Anspruchs gelöst. Vorteilhafte Ausgestaltungen ergeben sich aus den abhängigen Ansprüchen.

Ein erfindungsgemäßer Kartenkörper für einen Datenträger umfasst wenigstens eine erste und eine zweite Folie. Die erste Folie umfasst einen ersten lichtleitenden Flächenbereich aus lichtleitendem Material, der angrenzend zu einem ersten opaken Flächenbereich angeordnet ist. Der erste opake Flächenbereich besteht aus opakem Material. Die zweite Folie umfasst einen zweiten lichtleitenden Flächenbereich aus einem lichtleitenden Material. Der zweite lichtleitende Flächenbereich liegt benachbart zu einem zweiten opaken Flächenbereich. Die erste Folie und die zweite Folie sind flächig übereinanderliegend angeordnet. Die erste Folie und die zweite Folie sind so ausgerichtet, dass der erste lichtleitende Flächenbereich und der zweite lichtleitende Flächenbereich einen Überlappungsbereich bilden.

Der erfindungsgemäße Kartenkörper umfasst weiter eine erste Deckfolie. Die erste Deckfolie ist opak ausgebildet und über der ersten Folie angeordnet. Der Übergang zwischen den ersten und zweiten lichtleitenden Flächenbereichen zu den ersten und zweiten opaken Flächenbereichen weist lichtstreuende Partikel auf.

Licht im ersten und/ oder zweiten lichtleitenden Flächenbereich wird am Übergang zum ersten und/ oder zweiten opaken Flächenbereich durch die lichtstreuenden Partikel isotrop gestreut. Unter anderem wird Licht durch den ersten und/ oder zweiten opaken Flächenbereich zur ersten Deckfolie derart gestreut, dass ein Anteil des Lichts im ersten und/ oder zweiten lichtleitenden Flächenbereich im Bereich des Übergangs durch die erste Deckfolie dringt bzw. optisch erkennbar ist. Die Lichtstreuung findet im Wesentlichen innerhalb des Kartenkörpers statt. Eine externe Beeinflussung der Streuwirkung durch die lichtstreuenden Partikeln, bspw. durch Kratzer, ist nicht mehr gegeben. Anhand der Lichtstreuung, insbesondere dem Streumuster auf der ersten Deckfolie, kann die Echtheit des Kartenkörpers und somit des Datenträgers geprüft und sichergestellt werden. Zudem ergibt sich an der ersten Deckfolie ein optischer Effekt eines durchscheinenden Randleuchtens des Übergangs der ersten und zweiten lichtleitenden Flächenbereiche zu dem ersten bzw. zweiten opaken Flächenbereich. Mit der vorliegenden Ausgestaltung wird ein Lichtglanzeffekt erzielt, der zur optischen Auswertung und Aufwertung des Kartenkörpers beiträgt. Mithilfe der vorliegenden Erfindung wird ein maschinenlesbares Merkmal geschaffen. Das maschinenlesbare Merkmal kann eine Auswertung einer Wellenlänge und/ oder ein optisches Abstrahlmuster an einer Oberfläche des Datenträgers sein.

Im Allgemeinen wird vorliegend als opakes Material ein nichttransparentes Material bezeichnet. Die Opazität des Materials gibt die lichtblockierende Eigenschaft des Materials an. Ein opakes Material kann unter anderem halbtransparent, milchig oder lichtundurchlässig sein.

Bei einem Datenträger im Sinne der Erfindung handelt es sich um eine Zahlungs- und/oder Identifikationskarte vorzugsweise im Kreditkartenformat (ID0) oder in einem Format, die als Authentifizierungs- und/oder Speicherkarte eingesetzt werden kann. Diese Art von Datenträger kann mit einem Magnetstreifen und/ oder einem Mikroprozessor sowie einer kontaktbehafteten und/oder kontaktlosen Datenschnittstelle für Lesegeräte ausgestattet sein, die es ermöglicht, mit Hilfe der Karte Datenverarbeitungsaufgaben durchzuführen. Der integrierte Schaltkreis weist einen Mikroprozessor auf und ist unter anderem besonders manipulationssicher, verfügt aber im Vergleich zu gängigen Standardmikroprozessoren, wie etwa für PCs, über eine stark eingeschränkte Rechenleistung und ist mithin ressourcenbeschränkt. Eine Benutzerschnittstelle in Form einer Anzeigeeinrichtung und/ oder einer geringen Anzahl von Tasten und/oder eines Sensors zur Erfassung eines biometrischen Merkmals kann vorgesehen sein. Die Herstellung dieser Art von Datenträgern ist bekannt, beispielsweise aus dem "Handbuch der Chipkarten", W. Rankl, W. Effing, 5. Auflage, 2008, Karl Hanser Verlag München oder dem Buch "Vom Plastik zur Chipkarte", T. Tarantino, Y. Haghiri, 1999, Carl Hanser Verlag München. Gemäß diesen Werken werden die Karten typischerweise aus mehreren Schichten aus Kunststoff aufgebaut, die durch Laminieren miteinander verbunden werden.

Lichtstreuende Partikel können in unterschiedlicher Form am Übergang bereitgestellt werden. Vorzugsweise sind im ersten und/ oder zweiten opaken Flächenbereich die lichtstreuenden Partikel insbesondere integral eingebracht. Die lichtstreuenden Partikel können eine Dotierung bzw. Additive sein. Weiterhin können lichtstreuende Partikel als Gasbläschen, Mikrokugeln und/ oder Flakes bereitgestellt werden. Die lichtstreuenden Partikel können bereits während der Herstellung des ersten und/ oder zweiten lichtleitenden Flächenbereichs sowie des ersten und/ oder zweiten opaken Flächenbereichs bereitgestellt werden. Zudem können lichtstreuende Partikel in beliebiger Form im Übergang eingebracht sein. Die lichtstreuenden Partikel können sich in ihrer Form, Farbe, Oberfläche und Opazität unterscheiden.

In einer Ausführungsform kann vorgesehen sein, dass die erste und/oder zweite Folie mittels Koextrusion bereitgestellt ist. Dies ermöglicht eine einfache Herstellung des Kartenkörpers.

In einer Ausführungsform ist eine Konzentration der lichtstreuenden Partikel in dem ersten und/ oder zweiten opaken Flächenbereich gleichmäßig. Während der Herstellung der ersten und/ oder zweiten Folie kann beispielsweise mittels Temperatureintrag eine Verschiebung der Konzentration vorgenommen werden, sodass eine Dichte lichtstreuender Partikel im Übergang zum ersten bzw. zweiten lichtleitenden Flächenbereich abnimmt.

In einer Ausführungsform kann vorgesehen sein, dass die Konzentration von lichtstreuenden Partikeln im ersten opaken Flächenbereich und/ oder im zweiten opaken Flächenbereich im Übergang unterschiedlich zu Bereichen des ersten und/ oder zweiten opaken Flächenbereichs, die weiter von dem Übergang zu dem ersten bzw. zweiten lichtleitenden Flächenbereich entfernt liegen. Eine größere Konzentration an lichtstreuenden Partikeln bewirkt eine große Häufigkeit an Lichtstreuung. Licht dringt vom ersten und/ oder zweiten lichtleitenden Flächenbereich weniger weit in den ersten und/ oder zweiten opaken Flächenbereich ein. Die Breite des Randleuchtens ist geringer. Entsprechend ist mit kleinerer Konzentration von lichtstreuenden Partikeln im Übergang eine größere Eindringtiefe von Licht aufgrund geringerer Lichtstreuung möglich. Die Breite des Randleuchtens ist größer.

Die Konzentration kann entlang des Übergangs homogen ausgebildet sein. Je nach Herstellverfahren ist es möglich, die Verteilung lichtstreuender Partikel entlang des Übergangs inhomogen auszuführen. Dabei können gleiche oder unterschiedliche Partikel eingesetzt werden. Besondere optische Effekte, wie z. B. Farbglanz, Lichtbrechung, Glanzleuchten, vorzugsweise sternförmiges Glanzleuchten und/ oder 3D-Lichteffekt können erzielt werden.

Ein Kartenkörper gemäß der Erfindung kann eine zweite Deckfolie aufweisen. Vorzugsweise ist die zweite Deckfolie aus opaken, insbesondere lichtundurchlässigen Material, ausgebildet. Die zweite Deckfolie kann an der zweiten Folie an der der ersten Folie gegenüberliegender Seite angeordnet sein und die zweite Folie flächig bedecken. Die zweite Deckfolie kann beispielsweise mittels Laminieren oder Koextrusion aufgebracht sein. Sie kann aus Kunststoff hergestellt sein. Die zweite Deckfolie weist vorzugsweise eine teilweise metallisierte Oberfläche auf. Alternativ kann die zweite Deckfolie vollflächig eine metallisierte Oberfläche aufweisen. Die zweite Deckfolie kann lichtreflektierende Eigenschaften aufweisen. In einer Ausführungsform kann auf der der zweiten Folie zugewandten Seite eine reflektierende Beschichtung aufgebracht sein. Licht, das aus dem zweiten lichtleitenden Flächenbereich und/ oder aus dem zweiten opaken Flächenbereich ausgekoppelt und zur zweiten Deckfolie gerichtet ist, wird wieder zurück reflektiert. Partiell kann die Lichtintensität aufgrund geringerer Verluste erhöht werden. Darüber hinaus kann die zweite Folie lichtabsorbierende Eigenschaften aufweisen.

Vorzugsweise weist der Kartenkörper einen Lichteinspeisebereich auf. Der Lichteinspeisebereich ist ein Abschnitt des Kartenkörpers, der zum Hinzufügen von Licht, insbesondere zum Einspeisen von Licht in den ersten und/ oder zweiten lichtleitenden Flächenbereich ausgebildet ist. Der Lichteinspeisebereich kann ein Bauteil, beispielsweise eine Optik, sein, das mit dem ersten und/ oder zweiten lichtleitenden Flächenbereich verbunden ist. Er kann in den Kartenkörper, insbesondere in den ersten und/ oder zweiten lichtleitenden und/ oder opaken Flächenbereich angeordnet, insbesondere integriert sein. Der Lichteinspeisebereich kann ein integraler Teil dieser Flächenbereiche sein. Er kann in einer Ausführungsform an einer Kante, d.h. nicht an einer flächigen Seite der ersten und/ oder zweiten Deckfolie und/oder ersten und/ oder zweiten Folie, angeordnet sein. Der Lichteinspeisebereich kann einen Lichtleiter umfassen.

In einer Ausführungsform kann eine dem Kartenkörper zugewandte externe Lichtquelle über den Lichteinspeisebereich mit dem ersten und/ oder zweiten lichtleitenden Flächenbereich optisch verbunden werden. Die externe Lichtquelle kann beispielsweise über den Lichteinspeisebereich an der Kantenfläche des Kartenkörpers Licht in den ersten und/ oder zweiten lichtleitenden Flächenbereich einspeisen. Darüber hinaus könnte in der ersten und/ oder zweiten Deckfläche eine Öffnung zum Einleiten von Licht der externen Lichtquelle vorgesehen sein. Die Öffnung kann sich bis zum ersten und/ oder zweiten lichtleitenden Flächenbereich erstrecken. In der Öffnung kann ein lichtleitendes Material eingebracht sein. Anstatt einer Öffnung kann die erste und/ oder zweite Deckfläche einen lichtdurchscheinenden Bereich aufweisen, der ausgebildet ist, Licht der externen Lichtquelle zu dem ersten und/ oder zweiten Lichtleitenden Flächenbereich zumindest teilweise zu leiten. Die Öffnung und/ oder der lichtdurchscheinende Bereich sind demnach wenigstens ein Teil des Lichteinspeisebereichs. Die externe Lichtquelle kann Teil eines Kartenlesers sein.

Weiterhin kann der Kartenkörper eine interne Lichtquelle umfassen. Die interne Lichtquelle kann beispielsweise eine Leuchtdiode sein. Die interne Lichtquelle ist vorzugsweise im Kartenkörper angeordnet, dass der lichtabstrahlende Abschnitt in den ersten und/ oder zweiten lichtleitenden Flächenbereich ragt. Die interne Lichtquelle kann in der ersten und/ oder zweiten Folie, und/ oder in der ersten und/ oder zweiten Deckfolie angeordnet sein. Darüber hinaus können im Kartenkörper optische Bauelemente, beispielsweise eine Optik, oder elektronische Bauelemente, beispielsweise eine Energieversorgung und/ oder eine Ansteuerelektronik vorgesehen sein.

Vorzugsweise ist die Lichtquelle im Überlappungsbereich angeordnet. Licht der Lichtquelle kann annähernd gleichmäßig in der ersten und zweiten Folie verteilt an die erste und/ oder zweite Deckfolie gestreut werden.

Die erste und/ oder zweite Deckfolie kann zumindest im Überlappungsbereich halbtransparent bzw. teiltransparent ausgebildet sein. Ein Durchscheinen des Randleuchtens der ersten und/ oder zweiten Folie durch die erste Deckfolie und somit besondere optische Effekte, wie z. B. Glanzleuchten, Lichtausdünnungen oder Lichtstreifen sind möglich. Eine halbtransparente Ausführung der zweiten Deckfolie ermöglicht insbesondere die Verwendung einer externen Lichtquelle, beispielsweise in Kombination mit Echtheitsmerkmalen.

In einer Ausführungsform kann vorgesehen sein, dass im ersten und/ oder zweiten lichtleitenden Flächenbereich Farbpigmente oder lumineszierende Mittel als Additive eingebracht sind. Derartige Additive können eine besondere optische Ausgestaltung mit Hinterleuchtungseffekt ergeben. Insbesondere kann eine optische Auswertung des an der ersten Deckfolie sichtbaren und/ oder maschinenlesbaren Lichts als Echtheitsmerkmal herangezogen werden. Darüber hinaus ergibt sich im Überlappungsbereich ein Licht-Mischeffekt aus dem Licht der ersten und der zweiten Folie. Lumineszierende Mittel können Partikel sein, die beispielsweise nach Beleuchtung mit UV-Licht nachleuchten. Die Dauer und Wellenlänge des Nachleuchtens hängt vom Material der Partikel ab. Weiterhin können die Additive zum Abstrahlen oder Filtern von Licht bestimmter Wellenlänge geeignet sein.

Es kann vorgesehen sein, dass im Überlappungsbereich und/ oder im Übergang, ein Symbol angeordnet ist. Insbesondere ist das Symbol ausgebildet, durch Anregen mit Licht, insbesondere Hinterleuchtung, eine optische Wechselwirkung zum Kartenkörper zu generieren. Das Symbol ist vorzugsweise in die erste Deckfolie integriert oder auf der ersten Deckfolie aufgebracht. Das Symbol kann eine Metallisierung sein.

Vorzugsweise ist das Symbol nur erkennbar, wenn eine Hinterleuchtung stattfindet.

Erfindungsgemäß werden die oben genannten Aufgaben weiterhin durch einen Kartenkörper mit einem Inlay für einen Teil-Kartenkörper eines Datenträgers gelöst. Das Inlay erzeugt unter Einwirkung von Licht einen durch eine erste Deckfolie eines Kartenkörpers hindurch sichtbaren Effekt. Ein Lichteinspeisebereich leitet Licht in einen Lichtleiter des Teil-Kartenkörpers. Das eingeleitete Licht wird an einen Materialbereich umgelenkt.

Als Inlay wird vorliegend eine Zwischenschicht verstanden, die zumindest einen Teil eines Kartenkörpers (Teil-Kartenkörper) eines Datenträgers bildet. Das Inlay kann als Folienkörper bereitgestellt sein. Üblicherweise wird das Inlay von wenigstens einer Deckfolie, die flächig auf das Inlay aufgebracht wird, auf seiner flächigen Ausbreitung bedeckt.

Vorzugsweise ist der Materialbereich opak ausgebildet. Insbesondere ist der Materialbereich ein opaker Flächenbereich des Inlays. Das Inlay kann als Streifenfolie bereitgestellt sein. Der Materialbereich erstreckt sich in einer bevorzugten Ausgestaltung entlang des Lichtleiters und grenzt unmittelbar an diesen an. Licht in dem Lichtleiter kann an seinem Übergang zum Materialbereich teilweise ausgekoppelt werden. Der Materialbereich bewirkt insbesondere mittels Lichtstreueffekt ein zumindest teilweises Umlenken des ausgekoppelten Lichts. Bspw. wird ein Hinterleuchten der ersten Deckfolie erzielt.

Vorzugsweise wird das Inlay in einem Kartenkörper wie oben beschrieben eingesetzt. Dabei bildet das Inlay wenigstens die erste Folie und/ oder die zweite Folie. Insbesondere legt der Materialbereich den ersten und/ oder zweiten opaken Flächenbereich fest und der Lichtleiter den ersten und/ oder zweiten lichtleitenden Flächenbereich fest.

Der Kartenkörper und/ oder das Inlay kann weitere Schichten, Bauteile, wie z. B. elektronische Bauteile, und/ oder Prägungen umfassen. Der Kartenkörper kann einen Teil des Datenträgers bilden. Insbesondere kann vorgesehen sein, dass zwischen der ersten Folie und der ersten Deckfolie und/ oder der zweiten Folie bzw. der zweiten Deckfolie weitere Schichten und/ oder Folien angeordnet sind. Darüber hinaus kann auf der ersten und/ oder zweiten Deckfolie eine weitere Schicht, beispielsweise eine Druckschicht, Schutzschicht und/ oder weitere Folien, aufgebracht sein. Die erste und/ oder zweite Deckfolie kann eine Bedruckung, Prägung und/ oder einen Magnetstreifen aufweisen.

Die Erfindung wird im Folgenden noch weiter beispielhaft an Hand der Zeichnungen erläutert. Es zeigen:
- Fig. 1a: eine Explosionszeichnung eines Kartenkörpers;
- Fig. 1b: eine perspektivische Ansicht des Kartenkörpers aus Fig. 1a;
- Fig. 1c: eine Draufsicht auf den Kartenkörper aus Fig. 1a;
- Fig. 2: eine schematische Schnittansicht eines weiteren Kartenkörpers;
- Fig. 3: eine schematische Schnittansicht eines weiteren Kartenkörpers;
- Fig. 4: eine schematische Schnittansicht eines weiteren Kartenkörpers; und
- Fig. 5: eine schematische Draufsicht eines weiteren Kartenkörpers.

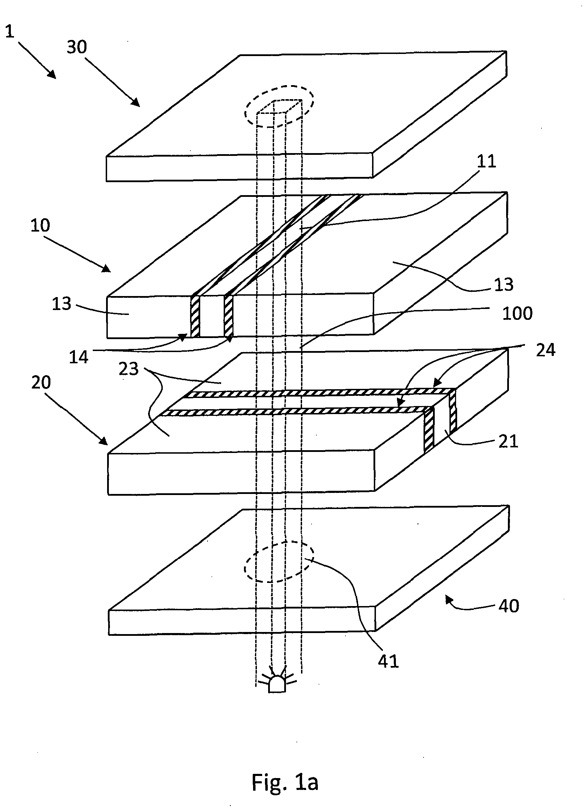

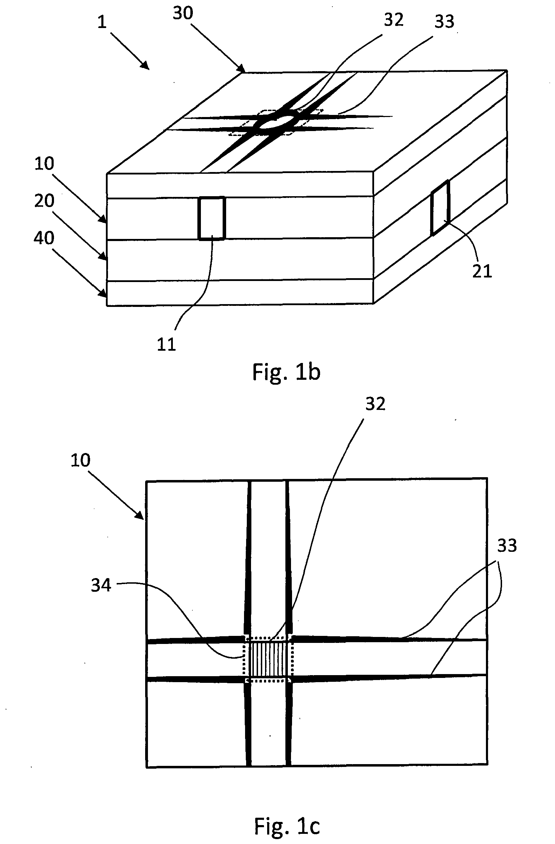

In den Figuren 1a bis 1c ist eine erste Ausführungsform der Erfindung anhand eines Kartenkörpers dargestellt. Figur 1a zeigt eine Explosionsansicht des Kartenkörpers und Figur 1b eine perspektivische Darstellung. Figur 1c zeigt eine Draufsicht auf eine erste Deckfolie des Kartenkörpers.

Der Kartenkörper 1 ist flächig ausgebildet. Exemplarisch umfasst in dieser Ausführungsform der Kartenkörper 1 eine erste Folie 10 und eine zweite Folie 20. Die erste Folie 10 ist vorliegend streifenförmig ausgebildet und beispielsweise mittels Koextrusion hergestellt. Sie weist drei nebeneinander liegende Streifen auf, nämlich einen ersten lichtleitenden Flächenbereich 11, sowie zwei erste opake Flächenbereiche 13, die in Längserstreckung beidseitig an den ersten lichtleitenden Flächenbereich 11 angrenzen. Die ersten opaken Flächenbereiche 13 sind unmittelbar benachbart und angrenzend zum ersten lichtleitenden Flächenbereich 11 angeordnet. Der erste lichtleitende Flächenbereich 11 und die beiden ersten opaken Flächenbereiche 13 sind in einer gemeinsamen ersten Ebene des Kartenkörpers 1 angeordnet.

Die zweite Folie 20 ist analog zur ersten Folie 10 ausgebildet. Sie umfasst einen zweiten lichtleitenden Flächenbereich 21, der beidseitig in seiner Längserstreckung von einem zweiten opaken Flächenbereich 23 umgeben ist. Die beiden zweiten opaken Flächenbereiche 23 grenzen unmittelbar an den zweiten lichtleitenden Flächenbereich 21 an. Ungeachtet einer Dicke der zweiten Folie 20 sind der zweite lichtleitende Flächenbereich 21 und die beiden zweiten opaken Flächenbereiche 23 in einer gemeinsamen zweiten Ebene des Kartenkörpers 1 angeordnet. Die zweite Ebene liegt unter der und parallel zur ersten Ebene.

Alternativ kann die erste Folie 10 aus einem opaken Material bestehen, in die eine Durchdringung mit einer bestimmten geometrischen Form, z.B. ein Stern oder ein Kreis, eingebracht wurde, z.B. mittels einer Stanze oder eines Lasers, wobei die bestimmte Form die erste Folie 10 vollständig durchdringt. In die Durchdringung der ersten Folie 10 wird ein Formteil eingelegt, welches aus einem lichtleitenden Material besteht und die geometrische Form der Durchdringung der ersten Folie 10 aufweist. Als Material für das Formteil kann z.B. eine transparente Folie gewählt werden, die z.B. Fluoreszenzfarbstoffe enthält. Entsprechendes gilt für die zweite Folie 20 analog.

Im Kartenkörper 1 sind die erste Folie 10 und die zweite Folie 20 derart zueinander ausgerichtet, dass sich die Längserstreckung des ersten lichtleitenden Flächenbereichs 11 mit der Längserstreckung des zweiten lichtleitenden Flächenbereichs 21 in einem Überlappungsbereich 100 (vgl. gepunktete Projektionslinie in Fig. 1a) kreuzt.

Über der ersten Folie 10, das heißt über der ersten Ebene, ist eine erste Deckfolie 30 angeordnet. Die erste Deckfolie 30 bedeckt die erste Folie 10. Unter der zweiten Folie 20, d.h. unter der zweiten Ebene, ist eine zweite Deckfolie 40 angeordnet. Die zweite Deckfolie 40, die zweite koextrudierte Folie 20, die erste koextrudierte Folie 10 und die erste Deckfolie 30 sind übereinander gestapelt und parallel zueinander angeordnet und bilden den Kartenkörper 1. Die zweite Deckfolie 40 und die erste Deckfolie 30 sind in diesem Ausführungsbeispiel außenliegende Folien des Kartenkörpers 1.

Die erste Deckfolie 30 besteht aus einem opaken Material, vorzugsweise ist sie halbtransparent, d. h. lichtdurchlässig (halbtransparent). Innenliegende Strukturen des Kartenkörpers 1, insbesondere die erste und/ oder zweite Folie 10, 20 sind durch die erste Deckfolie 30 hindurch nicht unmittelbar erkennbar. Die zweite Deckfolie 40 besteht ebenfalls aus einem opaken, vorzugsweise einem halbtransparenten Material.

Im Überlappungsbereich 100 weist die zweite Deckschicht 40 einen Lichteinspeisebereich 41 auf.

Unter dem Lichteinspeisebereich 41 ist eine Lichtquelle 50 angeordnet. Von der Lichtquelle 50 wird Licht durch den Lichteinspeisebereich 41 dem zweiten und ersten lichtleitenden Flächenbereich 21, 11 zugeführt. Die Lichtquelle 50 ist somit im Überlappungsbereich 100 angeordnet.

Von der Lichtquelle 50 dringt ein Teil des Lichts direkt über den Lichteinspeisebereich 41 geradlinig, d.h. ohne Reflektion, auf die erste Deckfolie 30 auf die der ersten Folie 10 zugewandten Seite. Die Lichtintensität ist groß genug, um ein deutliches und helles Durchscheinen an der ersten Deckfolie 30 zu erzielen. An der der ersten Folie 10 abgewandten Seite der ersten Deckfolie 30 erscheint im Überlappungsbereich 100, insbesondere im Wesentlichen in der Dimension der Kreuzungsfläche des ersten lichtleitenden Flächenbereichs 11 mit dem zweiten lichtleitenden Flächenbereichs 21 ein erster vollständig durchleuchtender Bereich 32. Aufgrund der Streuwirkung in der ersten Deckfolie 30, die durch deren Halbtransparenz bzw. Opazität verursacht ist, ergibt sich um den ersten vollständig durchleuchteten Bereich 32 eine koronaartige Ausprägung um den ersten vollständig durchleuchteten Bereich 32 und bildet den ersten teilbeleuchteten Bereich 34.

Die ersten und zweiten opaken Flächenbereiche 13, 23 bestehen aus opakem, vorzugsweise aus halbtransparentem Material. Die ersten und zweiten opaken Flächenbereiche 13, 23 können aus gleichen oder unterschiedlichen Material, insbesondere unterschiedlicher Opazität und/ oder Farbe sein. Der Übergang zwischen den ersten und zweiten opaken Flächenbereichen 13, 23 zu den ersten und zweiten lichtleitenden Flächenbereichen 11, 21 ist als Randbereich 14, 24 festgelegt. Die Randbereiche 14, 24 weisen lichtstreuende Partikel auf. Die lichtstreuenden Partikel sind in dieser Ausführungsform integraler Bestandteil der ersten und zweiten opaken Flächenbereiche 13, 23.

Licht von der Lichtquelle 50 gelangt über den Lichteinspeisebereich 41 in die ersten und zweiten lichtleitenden Flächenbereiche 11, 21. Das Licht im ersten und zweiten lichtleitenden Flächenbereich 11, 21 wird in Längserstreckung der ersten und zweiten Flächenbereiche 11, 21 geleitet. Zusätzlich wird Licht in Längsrichtung in den ersten und zweiten lichtleitenden Flächenbereich 11, 21 so eingekoppelt, dass eine Lichtleitung mittels Randreflektion stattfindet. Aufgrund der lichtstreuenden Partikel in den ersten und zweiten opaken Flächenbereichen 13, 23 kann dieses Licht teilweise in die ersten und zweiten opaken Flächenbereiche 13, 23 eindringen. Die lichtstreuenden Partikel bewirken eine isotrope Lichtstreuung des auftreffenden Lichts. Es entsteht bei der ersten und zweiten Folie 10, 20 an den Randbereichen 14, 24 ein optischer Effekt, nämlich ein Randleuchten. Größe und Intensität des Randleuchtens der Randbereiche 14, 24 hängen unter anderem von Größe und Beschaffenheit der lichtstreuenden Partikel sowie von der Opazität der ersten bzw. zweiten opaken Flächenbereichen 13, 23 ab.

Licht von der Lichtquelle 50, das in den lichtleitenden Bereichen geleitet wird, wird in den Randbereichen 14, 24 unter anderem orthogonal zur flächigen Ausbreitung der ersten und zweiten Folien 10, 20 umgelenkt und zur ersten Deckfolie 30 gerichtet.

Die halbtransparente Ausbildung der ersten opaken Flächenbereiche 11 und die Foliendicke der ersten Folie 10 ermöglichen ein Durchscheinen des an den Randbereichen 24 des zweiten lichtleitenden Flächenbereichs 21 ausgekoppelten Lichts über die ersten opaken Flächenbereiche 11. Grundsätzlich ist die Opazität der ersten Folie 10 proportional zur Foliendicke, sodass mit steigender Foliendicke die Intensität des Durchscheinens abnimmt, bei geringerer Foliendicke die Intensität des Durchscheinens zunimmt. Die Intensität hängt somit unter anderem von der Foliendicke, dem Material der ersten

Folie sowie der Lichtintensität zum Durchscheinen ab. Sowohl das an den Randbereichen 24 ausgekoppelte Licht als auch das an den Randbereichen 14 der ersten Folie 10 ausgekoppelte Licht scheint durch die erste Deckfolie 30 hindurch. An der Außenseite der ersten Deckfolie 30, d.h. an der der ersten Folie 10 gegenüberliegenden Seite, erscheint in Längserstreckung der ersten und zweiten lichtleitenden Flächenbereiche 11, 21 ein zweiter vollständig durchleuchteter Bereich 33. Der zweite vollständig durchleuchtete Bereich 33 liegt analog zur Lage der Randbereiche 14, 24 der ersten und zweiten Folie 10, 20, sodass für die erste und für die zweite Folie 10, 20 jeweils im Wesentlichen zwei parallel verlaufende lichtintensive Linien zu erkennen sind. Aufgrund reflektorischer Lichtleitung und stetiger Streuung an den Randbereichen 14, 24 nimmt die Leuchtintensität am zweiten vollständig durchleuchteten Bereich 33 mit zunehmendem Abstand vom Lichteinspeisebereich 41 bzw. Überlappungsbereich 100 ab. Die Lichtintensität des zweiten durchleuchteten Bereichs 33 nimmt dem Verlauf der ersten und zweiten lichtleitenden Flächenbereiche 11, 21 folgend vom Überlappungsbereich 100 weg ab.

Vom Überlappungsbereich 100 ausgehend betrachtet, vermischen sich der erste und zweite durchleuchtete Bereich 32, 33 vorwiegend innerhalb und im Bereich des ersten teilbeleuchteten Bereichs 34. Anfangs überwiegt optisch der erste vollständig durchleuchtete Bereich 32, sodass optisch im Wesentlichen die Eigenschaften, z.B. die Lichtfarbe, des ersten vollständig durchleuchteten Bereichs 32 erkennbar sind. Mit Entfernen vom Überlappungsbereich 100 überwiegt der zweite vollständig durchleuchtete Bereich 33, sodass überwiegend dessen optischen Eigenschaften erkennbar sind.

Eine zur Herbeiführung dieses Effekts geeignete erste und zweite Folie 10, 20 kann mittels Koextrusion hergestellt werden. Der erste und zweite lichtleitende Flächenbereich 11, 21 liegen unmittelbar benachbart und angrenzend zu den ersten bzw. zweiten opaken Flächenbereichen 13, 23. Eine gezielte Lichtauskopplung an den Randbereichen 14, 24 ist möglich. Die erste und/ oder die zweite Folie 10, 20 kann jeweils separat oder gemeinsam insbesondere einstückig hergestellt werden. Der erste lichtleitende Flächenbereich 11 kann sich hinsichtlich seiner Materialeigenschaften, beispielsweise Opazität bzw. Transmission, Farbe und/ oder Werkstoff vom zweiten lichtleitenden Flächenbereich 21 unterscheiden. Ebenfalls kann sich der erste opake Flächenbereich 13 vom zweiten opaken Flächenbereich 23 in seinen Materialeigenschaften, beispielsweise Opazität bzw. Transmission, Farbe und/ oder Werkstoff unterscheiden. Die den ersten und/ oder zweiten lichtleitenden Flächenbereichen 11, 21 benachbarten und/ oder angrenzenden ersten und/ oder opaken Flächenbereiche 13, 23 können zueinander unterschiedlich ausgeführt sein. Die zu den ersten und/ oder zweiten lichtleitenden Flächenbereichen 11, 21 benachbarten und/ oder angrenzenden ersten und/ oder opaken Flächenbereiche 13, 23 weisen eine größere Opazität auf als die ersten und/ oder zweiten lichtleitenden Flächenbereiche 11, 21.

Die erste Deckfolie 30 ist hinsichtlich ihrer Opazität derart halbtransparent, dass ein Erkennen von Strukturen unterhalb der ersten Deckfolie 30 nicht möglich ist. Ein Hintergrundlicht, beispielsweise ein Randleuchten aus dem Kartenkörper 1 heraus, scheint aber durch die Oberfläche der ersten Deckfolie 30 hindurch und ist an dieser erkennbar. Mit der vorliegenden Ausführungsform wird ein optischer Effekt erzielt. Insbesondere wird ein sternförmiges durchscheinendes Leuchten auf der Oberfläche der ersten Deckfolie 30 ermöglicht, wenn der Kartenkörper 1 im Überlappungsbereich von der zweiten Deckfolie 40 mit Licht versorgt wird.

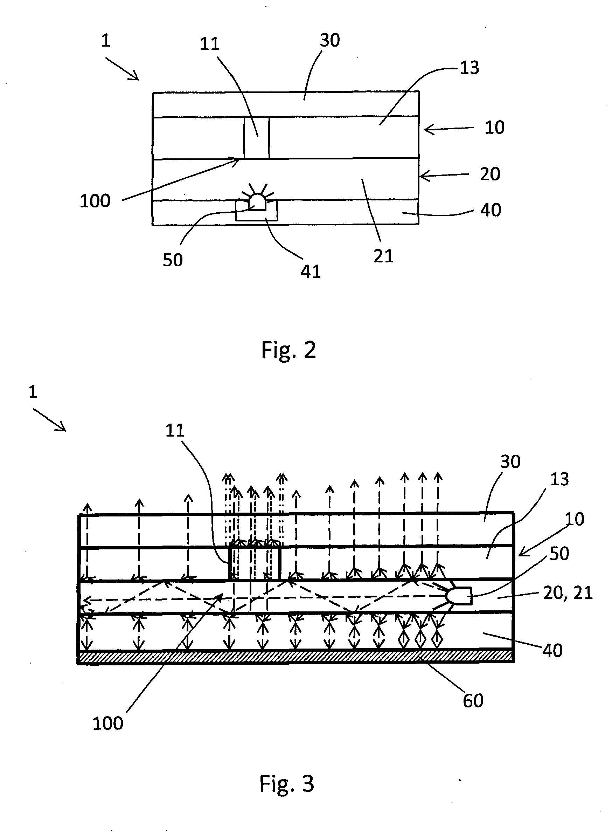

Figur 2 zeigt ein weiteres Ausführungsbeispiel der Erfindung in Form eines Kartenkörpers 1 eines Datenträgers in schematischer Schnittansicht. Der Kartenkörper 1 ist ähnlich dem Kartenkörper 1 der Figuren 1a bis 1c ausgestaltet. Er umfasst entsprechend eine erste Deckfolie 30, unter der eine erste Folie 10 und eine zweite Folie 20 flächig und angrenzend benachbart angeordnet ist. Die erste Folie 10 ist eine Streifenfolie. Sie weist einen ersten opaken Flächenbereich 13 auf. Der erste opake Flächenbereich 13 entspricht der Dicke der ersten Folie 10. Die erste Folie 10 umfasst weiterhin einen ersten lichtleitenden Flächenbereich 11. Der erste lichtleitende Flächenbereich 11 entspricht ebenfalls der Dicke der ersten Folie 10 und erstreckt sich über eine Längsrichtung der ersten Folie 10. Der erste lichtleitende Flächenbereich 11 ist seitlich in seiner Längsrichtung von dem ersten opaken Flächenbereich 13 begrenzt. Die erste Folie 10 bildet im Kartenkörper 1 eine erste Ebene, in der der erste opake Flächenbereich 13 und der erste lichtleitende Flächenbereich 11 angeordnet ist.

Die zweite Folie 20 ist ebenfalls eine Streifenfolie und analog zur ersten Folie 10 mit einem zweiten opaken Flächenbereich 23 und einem zweiten lichtleitenden Flächenbereich 21 ausgebildet. Der zweite opake Flächenbereich 23 und der zweite lichtleitende Flächenbereich 21 liegen streifenförmig benachbart und angrenzend zueinander. Die zweite Folie 20 bildet eine zweite Ebene im Kartenkörper 1. Die zweite Folie 20 ist zur ersten Folie 10 derart ausgerichtet, dass die Längsrichtung ihres streifenförmigen ersten lichtleitenden Flächenbereichs 11 nicht parallel zur Längsrichtung des streifenförmigen zweiten lichtleitenden Flächenbereichs 21 verläuft. Der erste lichtleitende Flächenbereich 11 überkreuzt bzw. überlappt den zweiten lichtleitenden Flächenbereich 21 im Überlappungsbereich 100.

Unter der zweiten Folie 20 liegt eine zweite Deckfolie 40. Die zweite Deckfolie 40 besteht aus opakem Material und ist hinsichtlich ihrer Opazität lichtundurchlässig. Die zweite Deckfolie 40 ist flächig parallel zur zweiten Folie 20 angeordnet und bedeckt diese. Im Überlappungsbereich 100 weist die zweite Deckfolie 40 einen Lichteinspeisebereich 41 auf. Der Lichteinspeisebereich 41 ist als Aussparung zur Aufnahme einer Lichtquelle 50 ausgestaltet. Die Lichtquelle 50 ist auf den Lichteinspeisebereich 41 ausgerichtet, sodass Licht der Lichtquelle 50 direkt im Überlappungsbereich 100 in den ersten lichtleitenden Flächenbereich 11 und zweiten lichtleitenden Flächenbereich 21 gestrahlt wird. Vorliegend ragt die Lichtquelle 50 in den zweiten lichtleitenden Flächenbereich 11.

Wie in den Figuren 1a bis 1c wird Licht von der Lichtquelle 50 senkrecht auf die erste Deckfolie 30 gestrahlt, sodass ein erster vollständig durchleuchteter Bereich 32 entsteht. Darüber hinaus sind ebenfalls in Randbereichen 14, 24, d. h. im Übergang zwischen den ersten und zweiten lichtleitenden Flächenbereichen 11, 21 zu den ersten bzw. zweiten opaken Flächenbereichen 13, 23, lichtstreuende Partikel angeordnet. An den Randbereichen 14, 24 wird ein Randleuchten hervorgerufen. Das Randleuchten der ersten und zweiten lichtleitenden Flächenbereiche 14, 24 wird isotrop gestreut, sodass Licht davon zur ersten Deckfolie 30 gerichtet wird.

Die halbtransparente Ausführung der ersten Deckfolie 30 lässt das zur ersten Deckfolie 30 gestreute Licht der Randbereiche 14, 24 durchscheinen. Ein Glanzlicht wird an der ersten Deckfolie 30 dargestellt. Das Glanzlicht zeigt einen im Überlappungsbereich 100 hellen bzw. lichtintensiven Flächenbereich, von dem sich das Randleuchten strahlenförmig bzw. sternförmig weg erstreckt. Es wird somit ein glanzartiges, sternförmiges Leuchten einem Betrachter an der Oberfläche der ersten Deckfolie 30 dargestellt. Aufgrund der Opazität der ersten Deckfolie 30 sind die erste Folie 10 und zweite Folie 20, insbesondere die ersten und zweiten lichtleitenden Flächenbereiche 14, 24 nicht erkennbar. Das Glanzmuster ist an der ersten Deckfolie 30 nur dann erkennbar, wenn die Lichtquelle 50 Licht in den Kartenkörper 1 einkoppelt (Lichtquelle ist eingeschaltet). Bei ausgeschalteter Lichtquelle ist lediglich die der ersten Folie 10 gegenüberliegende Seite der ersten Deckfolie 30 ohne Glanzlicht sichtbar.

Zwischen der ersten und zweiten Folie 10, 20 kann eine weitere Schicht und/ oder Folie eingebracht sein. Die weitere Schicht und/ oder Folie kann beispielsweise halbtransparent oder transparent, vorzugsweise wenigstens in einem Teilbereich im Überlappungsbereich 100 transparent, ausgebildet sein. Insbesondere kann sich die weitere Schicht und/ oder Folie in halbtransparenter Ausführung über die Randbereiche 14, 24 erstrecken. Beispielsweise werden der zweite vollständig durchleuchtete Bereiche 33 (s. Fig. 1c) stärker und/ oder breiter ausgeprägt. Weiterhin können optische zusätzliche Lichteffekte, beispielsweise Hallo, erzielt werden.

Alternativ zur oben beschriebenen Lage der Lichtquelle 50 im erfindungsgemäßen Kartenkörper 1, kann die Lichtquelle 50 direkt innerhalb eines lichtleitenden Bereichs 11, 21 angeordnet sein. Als weitere Alternative kann die Lichtquelle 50 in einem transparenten Material angeordnet sein, wobei das transparente Material an einen lichtleitenden Bereich 11, 21 angrenzt, sodass das Licht der Lichtquelle 50 aus dem transparenten Material in den lichtleitenden Bereich 11, 21 eindringt. Als weitere Alternative kann die Lichtquelle 50 in einem opaken Material angeordnet sein, wobei die Lichtquelle 50 direkt an einen lichtleitenden Bereich 11, 21 angrenzt, sodass das Licht der Lichtquelle 50 in den lichtleitenden Bereich 11, 21 strahlt.

In der Figur 3 ist eine weitere Ausführungsform der Erfindung dargestellt. Mithilfe dieser Ausführungsform wird ein Lichtstreuverhalten innerhalb eines Kartenkörpers 1 veranschaulicht. Die Schnittansicht zeigt einen Schnitt durch den Kartenkörper 1 entlang eines Randbereichs 24 einer zweiten Folie 20.

Der Kartenkörper 1 weist einen zu den Figuren 1a bis 1c und 2 ähnlichen, geschichteten Aufbau auf und umfasst entsprechend eine erste Deckfolie 30, eine erste Folie 10, die zweite Folie 20 und eine zweite Deckfolie 40, die parallel zueinander angeordnet sind. Die erste Folie weist einen ersten lichtleitenden Flächenbereich 11 und dazu benachbart und unmittelbar angrenzend einen ersten opaken Flächenbereich 13 auf. In einem Übergangsbereich (erster Randbereich 14) von dem ersten lichtleitenden Flächenbereich 11 zum ersten opaken Flächenbereich 13 sind darin lichtstreuende Partikel angeordnet. Analog zur ersten Folie 10 weist die zweite Folie 20 einen zweiten lichtleitenden Flächenbereich 21 und dazu benachbart einen zweiten opaken Flächenbereich 23 auf.

In einem Übergangsbereich, dem zweiten Randbereich 24, von dem zweiten lichtleitenden Flächenbereich 21 zum zweiten opaken Flächenbereich 23 sind darin lichtstreuende Partikel angeordnet. Die erste und zweite Folie 10, 20 sind so angeordnet, dass sich der erste lichtleitende Flächenbereich 11 mit dem zweiten lichtleitenden Flächenbereich 21 in einem Überlappungsbereich 100 überdecken.

Unter der zweiten Deckfolie 40, d.h. an der der zweiten Folie 20 gegenüberliegenden Seite, ist eine Druckschicht 60 angeordnet. Die Druckschicht 60 weist eine hohe Opazität auf. Sie ist im Wesentlichen lichtundurchlässig.

Eine Lichtquelle 50 ist in dem zweiten lichtleitenden Flächenbereich 21 angeordnet. Von der Lichtquelle 50 aus wird Licht in den zweiten lichtleitenden Flächenbereich 21 geleitet (s. gestrichelte Linien). Ein Teil des Lichts wird am Randbereich 24 der zweiten Folie durch lichtstreuende Partikel isotrop gestreut. Exemplarisch sind in Figur 3 lediglich Lichtstreuungen am benachbarten ersten opaken Flächenbereich 13 der ersten Folie dargestellt. In ähnlicher Weise findet eine Lichtstreuung des zweiten lichtleitenden Flächenbereichs im zweiten opaken Flächenbereich 23 statt. Licht aus dem zweiten lichtleitenden Flächenbereich 11 dringt in den zweiten opaken Flächenbereich 13 ein und wird gestreut.

Ein Teil des gestreuten Lichts wird in Richtung der ersten Deckfolie 30 und zweiten Deckfolie 40 gestreut. Im Detail wird das Licht immer weiter durch den zweiten opaken Flächenbereich 23 und ersten opaken Flächenbereich 13 gestreut, sodass ein Teil des Lichts aus der Lichtquelle 50 über den Randbereich 24 die erste und zweite Deckfolie 30, 40 hinterleuchtet (s. gestrichelte Pfeile Richtung erste Deckfolie 30). Aufgrund der geringen Dicken der ersten und zweiten Folie 10, 20 sowie der ersten Deckfolie 30 wird das gestreute Licht aus den Randbereichen 24 nur geringfügig in seiner Intensität geschwächt.

Der Teil des gestreuten Lichts aus den Randbereichen 24, welcher in Richtung der zweiten Deckfolie 40 gestreut wird, wird an der Druckschicht 60 reflektiert (s. gestrichelter Doppelpfeil Richtung Druckschicht 60) und wieder in den lichtleitenden Flächenbereich 21 eingeleitet. Aufgrund der Streuwirkung am Übergang zwischen zweiten lichtleitendem Flächenbereich 21 und zweiten opaken Flächenbereich 23 wird die Lichtintensität im zweiten lichtleitenden Flächenbereich 23 mit Abstand zur Lichtquelle 50 geringer (anteilig durch Lichtauskopplungen dargestellt). Die Eindringtiefe in den Randbereich 24 wird ebenfalls geringer. Der an der ersten Deckfolie 30 dargestellte optische Effekt erscheint weniger hell.

Weiterhin wird Licht in den ersten lichtleitenden Flächenbereich 11 durch den zweiten lichtleitenden Flächenbereich 21 eingeleitet. Dabei wird Licht direkt zur ersten Deckfolie 30 geleitet. Weiterhin wird analog zu dem Randbereich 24 der zweiten Folie 20 Licht vom Randbereich 14 des Übergangs der ersten Folie 10 an die erste Deckfolie 30 geleitet.

Anhand der Pfeildichte und der Pfeillänge ist die zu erwartende Lichtintensität dargestellt. Es ist zu erkennen, dass bei Aufsicht auf die erste Deckfolie 30 im Bereich der Lichtquelle 50 und im Überlappungsbereich 100 eine hohe Lichtintensität zu erwarten ist.

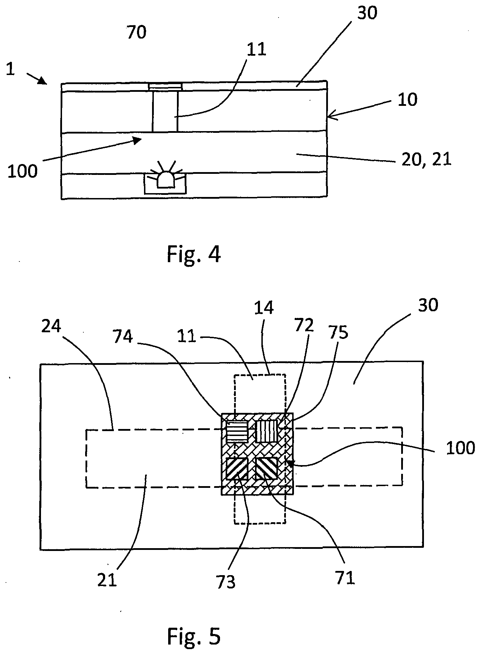

Figur 4 zeigt ein weiteres Ausführungsbeispiel eines Kartenkörpers 1 der Erfindung. Dieses Ausführungsbeispiel ist ähnlich dem der Figur 2. Im Unterschied ist im Überlappungsbereich 100 in der ersten Deckfolie 30 ein Symbol 70 ausgebildet. Das Symbol 70 kann ein Firmenlogo, ein Hologramm und/ oder ein Merkmal zur maschinellen Auswertung als Echtheitsmerkmal ausgebildet sein. Das Symbol 70 kann in seiner Beschaffenheit transparent, halbtransparent sein und/ oder eine metallisierte Struktur aufweisen. Insbesondere ist vorgesehen, dass ein erster vollständig durchleuchteter Bereich 32 das Symbol 70 mit Hintergrundbeleuchtung hervorhebt. Gleichzeitig wird durch den erfindungsgemäßen Aufbau ein Glanzleuchten vom Symbol 70 weg an der ersten Deckfolie 30 sichtbar. Zur weiteren Kennzeichnung kann das Symbol 70 z. B. mit einer micro-Perforierung versehen sein.

In der Figur 5 sind mehrere Anwendungsbereiche der Erfindung dargestellt. Insbesondere zeigt Figur 5 vier Positionen von Symbolen auf einem Kartenkörper. Der Kartenkörper ist gemäß der Erfindung ausgebildet und kann entsprechend den Figuren 1 bis 4 ausgeführt sein. Exemplarisch ist lediglich die erste Deckfläche 30 sowie die darunter liegenden ersten und zweiten lichtleitenden Flächenbereiche 11, 21 dargestellt. Der erste und zweite lichtleitende Flächenbereich 11, 21 bildet einen Überlappungsbereich 100.

Ein erstes Symbol 71 ist innerhalb des Überlappungsbereichs 100 angeordnet. Das erste Symbol 71 ist kleiner oder gleich (nicht dargestellt) als die Fläche des Überlappungsbereichs. Wird Licht in den ersten und/ oder zweiten lichtleitenden Flächenbereich 11, 21 eingeleitet, ergibt sich ein erster vollständig durchleuchteter Bereich, der das erste Symbol 71 vollständig umgibt. Das erste Symbol 71 wird hinterleuchtet. Weiterhin werden die Randbereiche 14, 24 durch Lichtstreuung, wie zu den Figuren 1 bis 4 bereits beschrieben, durch Hinterleuchten der ersten Deckfolie 30 dargestellt.

Ein zweites Symbol 72 ist im Überlappungsbereich 100 und zusätzlich über dem zweiten Randbereich 24 angeordnet. Das zweite Symbol 72 wird teilweise durch den ersten vollständig durchleuchteten Bereich hinterleuchtet. Zusätzlich erfährt das zweite Symbol 72 einen Lichteffekt durch den ersten teilbeleuchteten Bereich sowie dem Randleuchten des zweiten Randbereichs 24. Beispielsweise kann der Randbereich 24 in anderer Farbgestaltung zum Überlappungsbereich 100 ausgeführt sein. Entsprechend wird das zweite Symbol 72 in dem Abschnitt, mit dem es den Randbereich 24 abdeckt, mit den Effekten des Randleuchtens, bspw. besondere Lichtfarbe, oder Helligkeit, versehen.

Ein drittes Symbol 73 ist im Überlappungsbereich 100 und zusätzlich über dem Randbereich 14 der ersten Folie angeordnet. Das dritte Symbol wird mit Lichteffekten analog zum zweiten Symbol 72 versehen, jedoch anstatt der Beeinflussung des Randbereichs 24 durch den Randbereich 14.

Ein viertes Symbol 74 ist im Überlappungsbereich 100 und zusätzlich über dem Randbereich 14 der ersten Folie und über dem Randbereich 24 der zweiten Folie angeordnet. Entsprechend wird das vierte Symbol hinsichtlich seiner optischen Effekte durch die Randbereiche 14, 24 sowie dem Überlappungsbereich 100 beeinflusst.

Ein fünftes Symbol 75 ist im Überlappungsbereich 100 so angeordnet, dass es sich über den gesamten Überlappungsbereich 100 hinaus erstreckt. Das fünfte Symbol 75 erhält in einem inneren Flächenbereich eine Hintergrundbeleuchtung. Darüber hinaus wird der innere Flächenbereich durch die überdeckten Randbereiche 14, 24 anhand Randleuchten beleuchtet. Das fünfte Symbol 75 erscheint mit einem Mix unterschiedlicher Lichteffekte.

Zusätzlich kann ein transparentes Fenster am ersten, zweiten, dritten, vierten und/ oder fünften Symbol 71-75 angeordnet sein.

Mit der vorliegenden Erfindung können durch besondere Hervorhebung von Randbereichen 14, 24 der ersten und/ oder zweiten Folie besondere optische Effekte in einem Kartenkörper 1 oder in einem Inlay, insbesondere zur Verwendung in einem Kartenkörper 1, erzielt werden. Die optischen Effekte können zur Echtheitsprüfung und/oder zur Kommunikation genutzt werden.

## Patentansprüche

1. Kartenkörper (1) für einen Datenträger, wobei der Kartenkörper (1) wenigstens eine erste und eine zweite Folie (10, 20) umfasst, die erste Folie (10) einen ersten lichtleitenden Flächenbereich (11) aus einem lichtleitenden Material sowie einen den ersten lichtleitenden Flächenbereich (11) angrenzenden ersten opaken Flächenbereich (13) aus einem opaken Material umfasst, die zweite Folie (20) einen zweiten lichtleitenden Flächenbereich (21) aus einem lichtleitenden Material umfasst, der zu einem zweiten opaken Flächenbereich (23) benachbart ist, die erste Folie (10) und die zweite Folie (20) flächig übereinander liegend angeordnet sind und die erste und die zweite Folie (10, 20) so ausgerichtet sind, dass der erste lichtleitende Flächenbereich (11) und der zweite lichtleitende Flächenbereich (21) einen Überlappungsbereich (100) bilden;
**dadurch gekennzeichnet, dass**
der Kartenkörper (1) eine erste Deckfolie (30) umfasst, wobei die erste Deckfolie (30) opak ausgebildet ist und über der ersten Folie (10) angeordnet ist, und
ein Übergang (14, 24) von dem ersten und zweiten lichtleitenden Flächenbereich (11, 21) zu dem ersten und zweiten opaken Flächenbereich (13, 23) lichtstreuende Partikel aufweist,
wobei im Kartenkörper (1) die erste Folie (10) und die zweite Folie (20) derart zueinander ausgerichtet sind, dass sich eine Längserstreckung des ersten lichtleitenden Flächenbereichs (11) mit einer Längserstreckung des zweiten lichtleitenden Flächenbereichs (21) in einem Überlappungsbereich (100) kreuzt.

2. Kartenkörper nach Anspruch 1, **dadurch gekennzeichnet, dass** der erste und/oder zweite opake Flächenbereich (13, 23) angrenzend zu dem ersten lichtleitenden Flächenbereich (11) bzw. angrenzend zu dem zweiten lichtleitenden Flächenbereich (21) lichtstreuende Partikel umfasst.

3. Kartenkörper (1) nach einem der vorhergehenden Ansprüche, **dadurch gekennzeichnet, dass** die erste Folie (10) und/ oder zweite Folie (20) eine koextrudierte erste bzw. zweite Folie ist.

4. Kartenkörper (1) nach einem der vorhergenannten Ansprüche, **dadurch gekennzeichnet, dass** eine Konzentration lichtstreuender Partikel im ersten opaken Flächenbereich (13) und/ oder im zweiten opaken Flächenbereich (23) im Übergang (14, 24) kleiner ist als in Bereichen des ersten und/ oder zweiten opaken Flächenbereichs (13, 23), die weiter von dem Übergang (14, 24) zu dem ersten bzw. zweiten lichtleitenden Flächenbereich (11,13) entfernt liegen.

5. Kartenkörper (1) nach einem der vorhergehenden Ansprüche, **dadurch gekennzeichnet, dass** der Kartenkörper eine zweite Deckfolie (40) aufweist, die opak ausgebildet ist.

6. Kartenkörper (1) nach einem der vorhergehenden Ansprüche, **dadurch gekennzeichnet, dass** der Kartenkörper einen Lichteinspeisebereich (41) zum Einspeisen von Licht in den ersten lichtleitenden Flächenbereich (11) und/ oder in den zweiten lichtleitenden Flächenbereich (21) aufweist.

7. Kartenkörper (1) nach Anspruch 5, **dadurch gekennzeichnet, dass** der Lichteinspeisebereich (41) im ersten lichtleitenden Flächenbereich (11) und/ oder im zweiten lichtleitenden Flächenbereich (21) angeordnet ist.

8. Kartenkörper (1) nach Anspruch 5, **dadurch gekennzeichnet, dass** der Lichteinspeisebereich (41) in der ersten und/ oder zweiten Deckfolie (30, 40) angeordnet ist.

9. Kartenkörper (1) nach einem der Ansprüche 5 bis 7, **dadurch gekennzeichnet, dass** der Lichteinspeisebereich (31) eine interne Lichtquelle (50) und/ oder eine lichtleitende Verbindung zu einer externen Lichtquelle (50) umfasst.

10. Kartenkörper (1) nach einem der vorhergehenden Ansprüche, **dadurch gekennzeichnet, dass** die erste und/ oder zweite Deckfolie (30, 40) bei dem Überlappungsbereich (100) teiltransparent ausgebildet ist.

11. Kartenkörper nach einem der vorhergehenden Ansprüche, **dadurch gekennzeichnet, dass** der erste und/ der zweite lichtleitende Flächenbereich (11, 21) Farbpigmente und/ oder lichtstreuende Partikel umfasst.

12. Kartenkörper (1) nach einem der vorhergehenden Ansprüche, **dadurch gekennzeichnet, dass** über dem Überlappungsbereich (100) ein Symbol (70, 71, 72, 73, 74, 75) angeordnet ist, das durch Anregen mit Licht aus dem Überlappungsbereich (100), insbesondere Hinterleuchten, sich optisch vom Kartenkörper (1) absetzt.

13. Kartenkörper (1) nach einem der vorhergenannten Ansprüche, **dadurch gekennzeichnet, dass** die Opazität des ersten und zweiten opaken Bereichs (13, 23) größer ist als die Opazität der ersten Deckfolie (30).

14. Kartenkörper nach einem der vorhergehenden Ansprüche mit einem Inlay für einen Teil-Kartenkörper eines Datenträgers, das unter Einwirkung von Licht einen durch eine erste Deckfolie (30) eines Kartenkörpers (1) gemäß Anspruch 1 hindurch sichtbaren Effekt erzeugt, wobei von einem Lichteinspeisebereich (41) Licht in dem Teil-Kartenkörper (1) in einem Lichtleiter in einer Längserstreckung geleitet wird und das Licht an einem Materialbereich umgelenkt wird.

15. Kartenkörper nach Anspruch 14, **dadurch gekennzeichnet, dass** der Materialbereich sich entlang des Lichtleiters erstreckt und angrenzend zu diesem verläuft.

16. Kartenkörper nach einem der Ansprüche 14 bis 15, **dadurch gekennzeichnet, dass** das Inlay in einem Kartenkörper (1) nach einem der Ansprüche 1 bis 12 eingesetzt wird.

## Claims

1. A card body (1) for a data carrier, wherein the card body (1) comprises at least a first and a second foil (10, 20), the first foil (10) comprises a first light-conducting areal region (11) of a light conducting material and a first opaque areal region (13) of an opaque material adjoining the first light-conducting areal region (11), the second foil (20) comprises a second light-conducting areal region (21) of a light conducting material which is adjacent to a second opaque areal region (23), the first foil (10) and the second foil (20) are arranged areally lying one above the other and the first and the second foil (10, 20) are aligned such that the first light-conducting areal region (11) and the second light-conducting areal region (21) form an overlap region (100);
**characterized in that**
the card body (1) comprises a first cover foil (30), wherein the first cover foil (30) is configured to be opaque and is arranged above the first foil (10), and
a transition (14, 24) from the first and second light-conducting areal region (11, 21) to the first and second opaque areal region (13, 23) has light-scattering particles,
wherein in the card body (1) the first foil (10) and the second foil (20) are aligned with each other in such a way that a longitudinal extension of the first light-conducting areal region (11) crosses a longitudinal extension of the second light-conducting areal region (21) in an overlap region (100).

2. The card body according to claim 1, **characterized in that** the first and/or second opaque areal region (13, 23) adjoining the first light-conducting areal region (11) and/or adjoining the second light-conducting areal region (21) comprises light-scattering particles.

3. The card body (1) according to any of the preceding claims, **characterized in that** the first foil (10) and/or second foil (20) is a co-extruded first and/or second foil.

4. The card body (1) according to any of the aforementioned claims, **characterized in that** a concentration of light-scattering particles in the first opaque areal region (13) and/or in the second opaque areal region (23) is smaller in the transition (14, 24) than in regions of the first and/or second opaque areal region (13, 23) which are disposed further away from the transition (14, 24) to the first and/or second light-conducting areal region (11, 13).

5. The card body (1) according to any of the preceding claims, **characterized in that** the card body has a second cover foil (40) which is configured to be opaque.

6. The card body (1) according to any of the preceding claims, **characterized in that** the card body has a light feeding region (41) for feeding light into the first light-conducting areal region (11) and/or into the second light-conducting areal region (21).

7. The card body (1) according to claim 5, **characterized in that** the light feeding region (41) is arranged in the first light-conducting areal region (11) and/or in the second light-conducting areal region (21).

8. The card body (1) according to claim 5, **characterized in that** the light feeding region (41) is arranged in the first and/or second cover foil (30, 40).

9. The card body (1) according to any of the claims 5 to 7, **characterized in that** the light feeding region (31) comprises an internal light source (50) and/or a light-conducting connection to an external light source (50).

10. The card body (1) according to any of the preceding claims, **characterized in that** the first and/or second cover foil (30, 40) in the overlap region (100) is configured to be partially transparent.

11. The card body according to any of the preceding claims, **characterized in that** the first and/ the second light-conducting areal region (11, 21) comprises color pigments and/or light-scattering particles.

12. The card body (1) according to any of the preceding claims, **characterized in that** above the overlap region (100) a symbol (70, 71, 72, 73, 74, 75) is arranged which is distinguished optically from the card body (1) by excitation with light from the overlap region (100), in particular backlighting.

13. The card body (1) according to any of the preceding claims, **characterized in that** the opacity of the first and second opaque region (13, 23) is greater than the opacity of the first cover foil (30).

14. The card body according to any of the preceding claims, comprising an inlay for a partial card body of a data carrier, which, under the action of light, produces an effect that is visible through a first cover foil (30) of a card body (1) according to claim 1, wherein from a light feeding region (41) light is conducted in the partial card body (1) and the light is deflected at a material region.

15. The card body according to claim 14, **characterized in that** the material region extends along the light conductor and extends adjoining said light conductor.

16. The card body according to one of the claims 14 to 15, **characterized in that** the inlay is inserted into a card body (1) according to one of the claims 1 to 12.

## Revendications

1. Corps de carte (1) pour un support de données, cependant que le corps de carte (1) comprend au moins une première et une deuxième feuille (10, 20), la première feuille (10) comprend une première zone de surface (11) conductrice de lumière en un matériau conducteur de lumière ainsi qu'une première zone de surface (13) opaque, en un matériau opaque, adjacente à la première zone de surface (11) conductrice, la deuxième feuille (20) comprend une deuxième zone de surface (21) conductrice de lumière, en un matériau conducteur de lumière, avoisinant une deuxième zone de surface (23) opaque, la première feuille (10) et la deuxième feuille (20) sont superposées de manière plane, et la première et la deuxième feuille (10, 20) sont alignées de telle façon que la première zone de surface (11) conductrice de lumière et la deuxième zone de surface (21) conductrice de lumière constituent une zone de chevauchement (100) ;
**caractérisé en ce que**
le corps de carte (1) comprend une première feuille de recouvrement (30), cependant que la première feuille de recouvrement (30) est opaque et agencée par-dessus la première feuille (10), et
une transition (14, 24) de la première et deuxième zone de surface (11, 21) conductrice de lumière à la première et deuxième zone de surface (13, 23) opaque comporte des particules diffusant de la lumière,
cependant que, dans le corps de carte (1), la première feuille (10) et la deuxième feuille (20) sont alignées de telle façon l'une par rapport à l'autre qu'une étendue longitudinale de la première zone de surface (11) conductrice de lumière croise, dans une zone de chevauchement (100), une étendue longitudinale de la deuxième zone de surface (21) conductrice de lumière.

2. Corps de carte selon la revendication 1, **caractérisé en ce que** la première et/ou deuxième zone de surface (13, 23) opaque comprend, de manière adjacente à la première zone de surface (11) conductrice ou de manière adjacente à la deuxième zone de surface (21) conductrice, des particules diffusant de la lumière.

3. Corps de carte (1) selon une des revendications précédentes, **caractérisé en ce que** la première feuille (10) et/ou deuxième feuille (20) est une première ou deuxième feuille coextrudée.

4. Corps de carte (1) selon une des revendications précédentes, **caractérisé en ce qu'**une concentration de particules diffusant de la lumière est, dans la première zone de surface (13) opaque et/ou dans la deuxième zone de surface opaque (23), plus faible à la transition (14, 24) que dans des zones de la première et/ou deuxième zone de surface opaque (13, 23) plus éloignées de la transition (14, 24) vers la première ou deuxième zone de surface (11, 13) conductrice de lumière.

5. Corps de carte (1) selon une des revendications précédentes, **caractérisé en ce que** le corps de carte comporte une deuxième feuille de recouvrement (40) qui est réalisée sous forme opaque.

6. Corps de carte (1) selon une des revendications précédentes, **caractérisé en ce que** le corps de carte comporte une zone d'introduction de lumière (41) pour l'introduction de lumière dans la première zone de surface (11) conductrice de lumière et/ou dans la deuxième zone de surface (21) conductrice de lumière.

7. Corps de carte (1) selon la revendication 5, **caractérisé en ce que** la zone d'introduction de lumière (41) est agencée dans la première zone de surface (11) conductrice de lumière et/ou dans la deuxième zone de surface (21) conductrice de lumière.

8. Corps de carte (1) selon la revendication 5, **caractérisé en ce que** la zone d'introduction de lumière (41) est agencée dans la première et/ou deuxième feuille de recouvrement (30, 40).

9. Corps de carte (1) selon une des revendications de 5 à 7, **caractérisé en ce que** la zone d'introduction de lumière (31) comprend une source interne de lumière (50) et/ou un raccordement, conducteur de lumière, à une source externe de lumière (50).

10. Corps de carte (1) selon une des revendications précédentes, **caractérisé en ce que** la première et/ou deuxième feuille de recouvrement (30, 40) est réalisée sous forme partiellement transparente dans la zone de chevauchement (100).

11. Corps de carte selon une des revendications précédentes, **caractérisé en ce que** la première et/ou la deuxième zone de surface (11, 21) conductrice de lumière comprend des pigments de couleur et/ou des particules diffusant de la lumière.

12. Corps de carte (1) selon une des revendications précédentes, **caractérisé en ce que**, au-dessus de la zone de chevauchement (100), un symbole (70, 71, 72, 73, 74, 75) est agencé, lequel, par excitation avec de la lumière provenant de la zone de chevauchement (100), en particulier par rétroéclairage, se démarque optiquement du corps de carte (1).

13. Corps de carte (1) selon une des revendications prémentionnées, **caractérisé en ce que** l'opacité de la première et deuxième zone opaque (13, 23) est plus élevée que l'opacité de la première feuille de recouvrement (30).

14. Corps de carte selon une des revendications précédentes, ayant un intercalaire pour un corps partiel de carte, d'un support de données, qui, sous l'action de lumière, génère à travers une première feuille de recouvrement (30) d'un corps de carte (1) selon la revendication 1 un effet visible, cependant que, depuis une zone d'introduction de lumière (41), de la lumière est conduite dans le corps partiel de carte (1) dans un conduit de lumière dans une étendue longitudinale, et la lumière est déviée à une zone de matériau.

15. Corps de carte selon la revendication 14, **caractérisé en ce que** la zone de matériau s'étend le long du conduit de lumière et y est adjacente.

16. Corps de carte selon une des revendications de 14 à 15, **caractérisé en ce que** l'intercalaire est inséré dans un corps de carte (1) selon une des revendications de 1 à 12.
